# EUROPÄISCHE PATENTSCHRIFT

(11) **EP 4 178 837 B1**
(45) Veröffentlichungstag und Bekanntmachung des Hinweises auf die Patenterteilung: **07.08.2024**
(21) Anmeldenummer: 21745924.7
(22) Anmeldetag: 05.07.2021
(51) Int. Cl.: B60T 7/10, G05G 7/04, G05G 1/04

(54) **ANORDNUNG ZUR UNTERSTÜTZUNG EINER FESTSTELLBREMSE UND ENTSPRECHENDER NACHRÜSTBAUSATZ, SOWIE FESTSTELLBREMSE**
ARRANGEMENT FOR ASSISTING A PARKING BRAKE, CORRESPONDING RETROFITTING KIT AND PARKING BRAKE
DISPOSITIF POUR ASSISTER UN FREIN DE STATIONNEMENT, UN KIT D'AMÉNAGEMENT CORRESPONDANT ET FREIN DE STATIONNEMENT

(30) Priorität: 10.07.2020 CH 8522020
(43) Veröffentlichungstag der Anmeldung: 17.05.2023
(73) Patentinhaber: Speedlounge GmbH, 3671 Herbligen (CH)
(72) Erfinder: JAUN, Stefan, 3671 Herbligen (CH)
(74) Vertreter: BOVARD AG
(86) Internationale Anmeldenummer: PCT/EP2021/068454
(87) Internationale Veröffentlichungsnummer: WO 2022/008410

(56) Entgegenhaltungen:
- CH-A- 433 024
- DE-A1- 4 122 447
- DE-U- 1 915 811

## Beschreibung

### Technisches Gebiet der Erfindung

Die vorliegende Erfindung bezieht sich auf eine Anordnung zur Unterstützung einer Feststellbremse, insbesondere für ein Fahrzeug. Ferner bezieht sich die vorliegende Erfindung auf ein Nachrüstbausatz, umfassend die erfindungsgemässe Unterstützungsanordnung und eine als Handbremse ausgebildete Feststellbremse, welche mit der Unterstützungsanordnung ausrüstbar ist.

### Stand der Technik

Für Fahrzeuge, d.h. PKW, landwirtschaftliche Fahrzeuge, etc. oder für bestimmte Anhänger, ist eine Feststellbremse als Bremseinrichtung zwingend vorgesehen. Eine solche Feststellbremse blockiert beim Abstellen des Fahrzeugs zumindest die Räder auf einer Achse dauerhaft und kann unabhängig von einer Betriebsbremse abstufbar betätigt werden. Eine entsprechende Bremseinrichtung umfasst einen Bremshebel, welcher im Falle einer Handbremse mittels Hand als Handhebel oder alternativ mittels Fuss als Bremspedal betätigbar ist und zwischen einer Freigabestellung und einer Feststellposition um ein Schwenklager schwenkbar ist. Eine herkömmliche Bremsanordnung ist durch die übertragbare Kraft zwischen dem Bremshebel und einem Bremszug oder Bremsgestänge betätigbar. Ferner ist im Allgemeinen an einem Handhebel einer Handbremse zur Freigabe der Feststellposition ein Aktor aktivierbar.

Generell umfassen bekannte Feststellbremsanordnungen eine Unterstützungsanordnung, um sowohl die zum Betrieb der Anordnung aufzuwendende Kraft bzw. Last zu reduzieren und/oder auch um die Freigabe zu steuern, welche ansonsten durch eine Energiefreisetzung bei ungedämpfter Freigabe zur Schädigung von beteiligten Anordnungen führen könnte. Hierfür sind Hubelemente oder Huberzeuger einsetzbar, welche zwischen dem Bremshebel und einem ortsfesten Element angeordnet sind. Insbesondere kann eine Anordnung des Hubelements vorgesehen sein, bei welcher mit Ausnahme der sogenannten Totpunktlage seine Kraftwirkungslinie stets einen sich mit der Bewegung des Bremshebels ändernden Abstand zum Schwenklager des Hubelements am ortsfesten Element aufweist. Damit wird durch das expansive und vorspannfähige Hubelement eine abgestufte Unterstützung der Bewegung des Bremshebels bereitgestellt. Gemäss dieser Anordnung kann vor der Totpunktlage die Vorspannung des Hubelements erhöht und nach Überschreiten der Totpunktlage ein Unterstützungsmoment bereitgestellt werden, welches in Abhängigkeit von der Stellung des Bremshebels ansteigt.

Hubelemente fungieren als Energiespeicher und/oder als Gegengewicht. Bekannt sind als Gasfedern ausgebildete Hubelemente mit einem Fluid, beispielsweise komprimierbarem Gas, typischerweise unter Druck stehendem Stickstoffgas, oder eine Hydraulikflüssigkeit. Eine Gasfeder, ausgebildet als abgeschlossener, hermetisch abgedichteter pneumatischer Aktuator, umfasst einen in einem Zylinder geführten Kolben mit einer Kolbenstange. Der Kolben, die Kolbenstange und auch vorhandene Dichtungen werden mittels einer gewissen Menge an Schmierstoff geschmiert. Das im Zylinder bewegte Schmieröl und das Gas erzeugen einen dämpfenden Effekt bei der Bewegung des Kolbens. Infolgedessen können Gasfedern eine relativ flache Federkennlinie aufweisen, um eine kontrollierte Kraft und Geschwindigkeit, sowie eine Dämpfung am Ende des Hubs bereitzustellen.

Allerdings muss zur Betätigung bekannter Feststellbremsanordnungen weiterhin eine gewisse nicht unerhebliche Kraft aufgewendet werden, insbesondere für die Bewegung des Bremshebels in die Feststellposition, beim Lösen des angezogenen Bremshebels und für die Bewegung in die Freigabestellung. Dies kann insbesondere bei einer regelmässigen Betätigung der Feststellbremse ein Hindernis für den Fahrer bzw. die Fahrerin darstellen, was unter Umständen dazu führen kann, dass die Feststellbremse nicht immer betätigt wird. Dies wiederum kann mitunter gravierende Konsequenzen haben, dann nämlich, wenn das Fahrzeug an steilem, geneigtem oder einem vermeintlich flachen, jedoch in Realität geneigtem Geländeabschnitt abgestellt wird. In diesem Fall kann nicht ausgeschlossen werden, dass das Fahrzeug durch die Einwirkung der Gravitation selbstständig wegrollt und in einen Verkehrsunfall verwickelt wird.

Eine Feststellbremse, deren Betätigung durch eine Feder unterstützt wird, ist aus der Offenlegungsschrift DE 41 22 447 A1 bekannt.

### Zusammenfassung der Erfindung

Aufgabe der vorliegenden Erfindung ist es demnach, eine Anordnung zur Unterstützung einer Feststellbremse vorzusehen, wodurch der Kraftaufwand zur Betätigung der Feststellbremse auf ein Minimum reduziert ist, so dass Anziehen und Lösen insbesondere einer als Handbremse ausgebildeten Feststellbremse schnell und einfach erfolgen kann. Die erfindungsgemässe Anordnung zur Unterstützung soll darüber hinaus als Modul bzw. Nachrüstbausatz ausgebildet sein, um zur Nachrüstung bestehender Feststellbremsanordnungen eingesetzt werden zu können.

Gelöst werden die Aufgaben durch eine Anordnung zur Unterstützung einer Feststellbremse, kurz «die Anordnung" genannt, gemäss Anspruch 1, durch einen Nachrüstbausatz gemäss Anspruch 9 und eine Feststellbremse mit der erfindungsgemässen Unterstützungsanordnung gemäss Anspruch 12.

Die erfindungsgemässe Anordnung ist zur Unterstützung einer Feststellbremse ausgebildet, welche einen Bremshebel umfasst, der in einer Trägereinrichtung schwenkbar zwischen einer Freigabestellung und einer Feststellposition gelagert und mittels Übertragungsmitteln mit einem Bremssystem koppelbar ist. Die Übertragungsmittel können unteranderem ein Bremszug, z.B. Bowdenzug und/oder ein Bremsgestänge umfassen.

Die erfindungsgemässe Anordnung umfasst ein Hubelement mit Energiespeichereinheit, welches relativ zu der Trägereinrichtung anordenbar und mit dem Bremshebel in Wirkverbindung bringbar ist. Die Anordnung zeichnet sich dadurch aus, dass die Wirkverbindung zwischen dem Hubelement und dem Bremshebel ein Umlenkelement umfasst, welches relativ zur Trägereinrichtung schwenkbar um eine Schwenkachse anordenbar ist und das Hubelement mit dem Bremshebel koppelt. Die Unterstützung der Bewegung des Bremshebels basiert auf einem rein mechanischen Mechanismus, welcher eingerichtet ist, um einen handbetätigbaren Bremshebel insbesondere in seine Endpositionen, d.h. eine Feststellposition und eine Freigabestellung, quasi selbsttätig zu überführen.

Da das Hubelement und das Umlenkelement relativ zu der Trägereinrichtung mittels entsprechender Halterungen anordenbar und damit unabhängig von der Trägereinrichtung der Feststellbremse sind, ist eine Nachrüstung einer bestehenden Feststellbremse möglich. Dabei kann die Anordnung und Gestaltung der Elemente der Unterstützungsanordnung individuell an die baulichen Begebenheiten angepasst werden. Die Halterungen können ausgebildet sein, um je nach Einbausituation mit der Trägereinrichtung der Feststellbremse verbunden zu werden, oder relativ zu dieser ortsfest fixiert zu werden.

In einer Ausführungsform der erfindungsgemässen Unterstützungsanordnung ist das Umlenkelement in Form einer Wippe mit einem ersten Hebelabschnitt und mit einem zweiten Hebelabschnitt ausgebildet, die sich, ausgehend von der Schwenkachse, jeweils in entgegengesetzte Richtungen erstrecken. Insbesondere ist das Umlenkelement mit dem ersten Hebelabschnitt gelenkig mit dem Hubelement und mit dem zweiten Hebelabschnitt mit dem Bremshebel verbindbar. Das wippenförmige Umlenkelement kann in einfacher Weise aus einem Blechteil geformt werden, wobei die Schwenkachse in einer mit dem Blechteil verbindbare Lagerhülse aufnehmbar ist. Mittels des Umlenkelements werden kinematische Bedingungen geschaffen, welche eine optimale Bedienung des Bremshebels der Feststellbremse mit Unterstützung des Hubelements erlauben.

Das Hubelement kann eine Gasdruckfeder als Energiespeichereinheit umfassen. Die Gasdruckfeder kann als ein hydropneumatisches Verstellelement mit einem in sich geschlossenen Energiespeicher angesehen werden. Dabei ist in einem Zylinderrohr ein Kolben mit einer Kolbenstange dichtend führbar, welches mit einem komprimierbaren Gas gefüllt ist, so dass ein expansives und vorspannbares Verstellelement bereitsteht.

In einer bevorzugten Ausführungsform der vorliegenden Erfindung umfasst die Wirkverbindung zwischen dem Hubelement und dem Bremshebel neben dem Umlenkelement ein Einstellelement zur Verbindung des Umlenkelements mit dem Bremshebel. Insbesondere ist das Einstellelement mit dem Bremshebel gelenkig verbindbar, beispielsweise mittels einer Kugelgelenk-Lagerung, umfassend Kugelpfanne und Gelenkkopf. Das Einstellelement ist eingerichtet, um in seiner Länge verstellbar zu sein. Somit kann in Abhängigkeit von der Einbausituation der Feststellbremse und der Gestaltung des Bremshebels eine geeignete Länge des Einstellelements gewählt werden, wodurch die erfindungsgemässe Anordnung flexibel kombinierbar ist.

In einer Ausführungsform der vorliegenden Erfindung ist das Hubelement derart relativ zum Umlenkelement anordenbar, dass folgend mit einer Bewegung des Bremshebels zwischen der Freigabestellung und der Feststellposition eine Kraftwirkungslinie des Hubelements ausserhalb seiner Totpunktlage einen sich verändernden Abstand zu der Schwenkachse aufweist. Als Totpunktlage wird eine Stellung des Hubelements bezeichnet, in dem seine Kraftwirkungslinie durch die Schwenkachse des Umlenkelements verläuft.

Bei Bewegung des handbetätigbaren Bremshebels zwischen der Freigabestellung, d.h. einer unteren Stellung und der Feststellposition, d.h. einer oberen Stellung, wird das Umlenkelement mitbewegt, so dass es um die Schwenkachse schwenkt. Diese Schwenkbewegung des Umlenkelements ist gekoppelt an eine Verschiebung des Kolbens des expansiven Hubelements entlang der Kraftwirkungslinie. Mit Bewegung des Hubelements, bedingt durch die von dem handbetätigbaren Bremshebel ausgehende Schwenkbewegung des Umlenkelements, ausserhalb der Totpunktlage, ändert sich der Abstand zwischen Schwenkachse und Kraftwirkungslinie in einer Ebene, welche senkrecht durch die horizontale Schwenkachse verläuft. Der Abstand der Kraftwirkungslinie zur Schwenkachse verursacht ein Drehmoment, welches auf das Umlenkelement und demnach indirekt auf den Bremshebel wirkt. Das Drehmoment nimmt in dem Mass zu, in dem sich der Abstand der Kraftwirkungslinie zur Schwenkachse vergrössert, so dass die Bewegung des Bremshebels eine zusätzliche Unterstützung der Bewegung des Bremshebels unabhängig von der im Hubelement gespeicherten Energie erfährt.

In den Positionen, in welchen der Bremshebel in der Nähe der Freigabestellung oder in der Nähe der Feststellposition ist, und demnach sich das Hubelement am weitesten entfernt von seiner Totpunktlage befindet, ist der Abstand zwischen Kraftwirkungslinie und Schwenkachse nahezu maximal im Vergleich zur Totpunktlage. Um den Bremshebel nach Aktivierung quasi selbsttätig in die Freigabestellung bzw. Feststellposition überführen zu können, wird die Anordnung der Elemente der Unterstützungsanordnung, d.h. Hubelement, Umlenkelement und eventuell Einstellelement, so gewählt, dass der Abstand der Kraftwirkungslinie zu der Schwenkachse dann so gross ist, dass ein dadurch erzeugtes, auf das Umlenkelement wirkendes Drehmoment hierfür ausreichend ist.

In einer bevorzugten Ausführungsform der erfindungsgemässen Anordnung ist die Anordnung aus Hubelement, Umlenkelement und eventuell Einstellelement als Nachrüstbausatz für eine bestehende Feststellbremse vorgesehen. Das Hubelement und das Umlenkelement sind in Halterungen gehalten. Die Halterungen werden bereitgestellt, um das Hubelement einerseits und das Umlenkelement andererseits relativ zu dem handbetätigbaren Bremshebel bzw. der Trägereinrichtung der Feststellbremse anzuordnen.

In einer bevorzugten Ausführungsform umfasst der Nachrüstbausatz eine erste Halterung für das Hubelement und eine zweite Halterung für das Umlenkelement. Alternativ kann ein gemeinsames Haltemittel vorgesehen sein, in welchem das Hubelement und das Umlenkelement gehalten sind. Ein Ende des Hubelements ist mit der ersten Halterung gelenkig verbunden, z.B. mittels einer Kugelgelenk-Lagerung. Die zweite Halterung umfasst eine Lagerung der Schwenkachse des Umlenkelements. Die ersten und zweiten Halterungen können aus einfachen Teilen, z.B. mittels Steckverbindung, gefügt und in geeigneter Position relativ zu dem Bremshebel ortsfest fixierbar sein. Das Hubelement und/oder das Umlenkelement können aber auch unmittelbar an der Trägereinrichtung gehalten werden oder an einer gemeinsamen Halterung.

Ferner bezieht sich die vorliegende Erfindung auf eine Feststellbremse, welche die erfindungsgemässe Anordnung zur Unterstützung umfasst. Eine derartige Feststellbremse ist nahezu universell in unterschiedlichen Fahrzeugen und Anhängern einsetzbar.

### Kurze Beschreibung der Figuren

Eine bevorzugte Ausführungsform der Erfindung wird im Folgenden anhand von Zeichnungen dargestellt, die lediglich zur Erläuterung dienen und nicht einschränkend auszulegen sind. Aus den Zeichnungen offenbar werdende Merkmale der Erfindung sollen einzeln und in jeder Kombination als zur Offenbarung der Erfindung gehörend betrachtet werden. In den Zeichnungen zeigen:
Figur 1 eine schematische perspektivische Ansicht einer Feststellbremse mit Bremshebel und Trägereinrichtung einschliesslich einer erfindungsgemässen Unterstützungsanordnung gemäss einer ersten Ausführungsform;
Figur 2 eine schematische teilweise aufgebrochene Seitenansicht der Unterstützungsanordnung mit Hubelement, Umlenkelement und Einstellelement gemäss der ersten Ausführungsform in einer Totpunktlage;
Figur 3 eine schematische teilweise aufgebrochene Seitenansicht der Unterstützungsanordnung gemäss Figur 2 in einer Position, in der sich der Bremshebel der Feststellbremse in einer Freigabestellung befindet;
Figur 4 eine schematische teilweise aufgebrochene Seitenansicht der Unterstützungsanordnung gemäss Figur 2 in einer Position, in der sich der Bremshebel der Feststellbremse in einer Feststellposition befindet;
Figur 5 eine perspektivische Ansicht des Hubelements der Unterstützungsanordnung gelagert an einer ersten Halterung und des Umlenkelements mit einer zweiten Halterung in einer Totpunktlage;
Figur 6 eine perspektivische Ansicht des Hubelements und des Umlenkelements der Unterstützungsanordnung mit ihren Halterungen in einer Freigabestellung,
Figur 7 eine perspektivische Ansicht des Hubelements und des Umlenkelements der Unterstützungsanordnung mit ihren Halterungen in einer Feststellposition.

### Detaillierte Beschreibung der Ausführungsformen der Erfindung

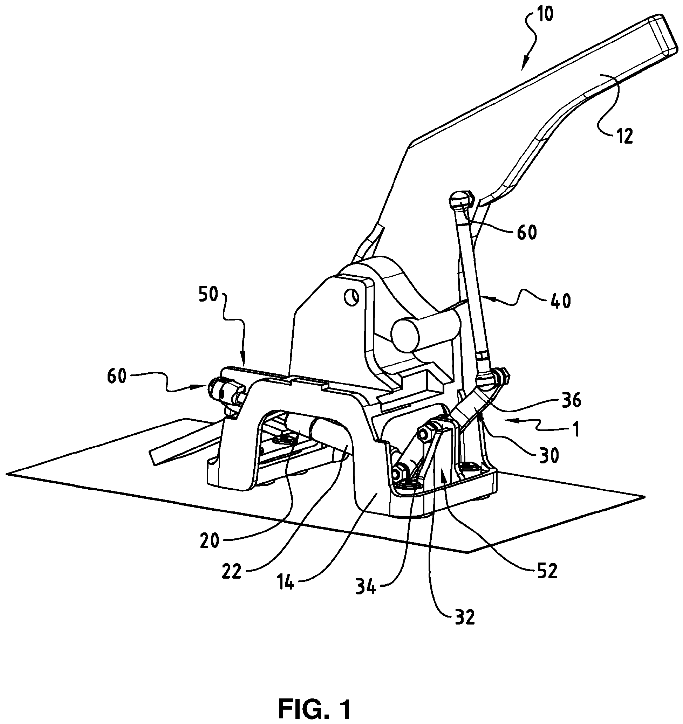

Die in der Figur 1 dargestellte Feststellbremse 10 mit einer Anordnung zur Unterstützung, welche folgend kurz als Anordnung 1 bezeichnet wird, umfasst einen handbetätigbaren Bremshebel 12 als manuell bedienbare Auslösevorrichtung zur Betätigung einer Bremsvorrichtung. Der Bremshebel 12 ist um eine Drehachse schwenkbar, welche in einer Trägereinrichtung 14 gelagert ist.

Nicht dargestellt ist, dass der Bremshebel 12 mit einem als Bremsseil bzw. Bremszug und/oder Bremsgestänge ausgebildeten Verstellmittel verbunden ist, um eine Kraft vom Bremshebel 12 auf ein Bremssystem zu übertragen. Das Bremssystem kann z.B. als Trommelbremse oder Scheibenbremse ausgebildet sein, um die Räder festzusetzen. Ferner ist eine mit dem Bremshebel 12 verbundene Sperrklinke vorgesehen, welche mit einem Rastersegment in Eingriff bringbar ist. Die Sperrklinke kann über ein seilförmiges oder stangenförmiges Verbindungsmittel mit einem am Bremshebel 12 aufgenommenen Aktor verbunden sein, welcher in einer gedrückten Position die Sperrklinke aus dem Eingriff am Rastersegment löst. Im Allgemeinen ist ferner vorgesehen, dass an einem Anlenkpunkt ein Bremszug angelenkt ist, ausgebildet als Bowdenzug, welcher mittels dem Bremsgestänge in Verbindung zu den zu aktivierenden Radbremsen steht. Darüber hinaus können noch weitere Funktionselemente im gesamten Bremssystem integriert sein.

Die mit der Feststellbremse 10 verbindbare Anordnung 1 zur Unterstützung des Bewegungsablaufs derselben umfasst ein Hubelement 20, welches beispielsweise durch eine Gasdruckfeder über einen Energiespeicher 22 verfügt. Das Hubelement 20 steht an einem Ende in Wirkverbindung mit einem Umlenkelement 30, welches in Form einer Wippe um eine zentrale Schwenkachse 32 schwenkbar ist. Die Schwenkachse 32 ist vorzugsweise parallel zu der Drehachse angeordnet, um die der Bremshebel 12 schwenkbar ist. Das Umlenkelement 30 weist einen ersten Hebelabschnitt 34 zur gelenkigen Verbindung mit dem Hubelement 20 und einen zweiten Hebelabschnitt 36 zur gelenkigen Verbindung mit dem Bremshebel 12 auf.

Das Hubelement 20 ist relativ zum Umlenkelement 30 angeordnet, wofür eine erste Halterung 50 vorgesehen ist. Die erste Halterung 50 kann relativ zur Trägereinrichtung 14 angeordnet sein, beispielsweise an der Trägereinrichtung 14 in einer ausgebildeten Ausnehmung aufgenommen sein und in Position fixiert werden. Das Hubelement 20 ist an einem Ende mit dem Umlenkelement 30 verbunden und mit einem entgegengesetzten Ende gelenkig an der Halterung 50 gehalten. Demnach bewegt sich ein Kolben des Hubelements 20 entlang einer Kraftwirkungslinie 24, wobei diese Kraftwirkungslinie 24, ausgehend von dem ersten Ende des Hubelements 20 gekoppelt an die Bewegung des Bremshebels 12, ein Kreissegment überstreicht.

Das Umlenkelement 30 ist mittels einer zweiten Halterung 52 relativ zu den Elementen der Feststellbremse 10 und relativ zum Hubelement 20 gehalten. Die zweite Halterung 52 kann ebenfalls in Bezug zur Trägereinrichtung 14 fixiert werden.

Zwischen Umlenkelement 30 und Bremshebel 12 ist zur Bereitstellung der Wirkverbindung ein Einstellelement 40 angeordnet, welches einerseits gelenkig am Bremshebel 12 und andererseits gelenkig mit dem zweiten Hebelabschnitt 36 verbindbar ist. Das Einstellelement 40 kann als in der Länge einstellbares Element ausgebildet sein, beispielsweise als Gewindestange. Die Lagerung des Einstellelements 40 an dem Bremshebel 12 kann eine Kugelgelenk-Lagerung 60 umfassen.

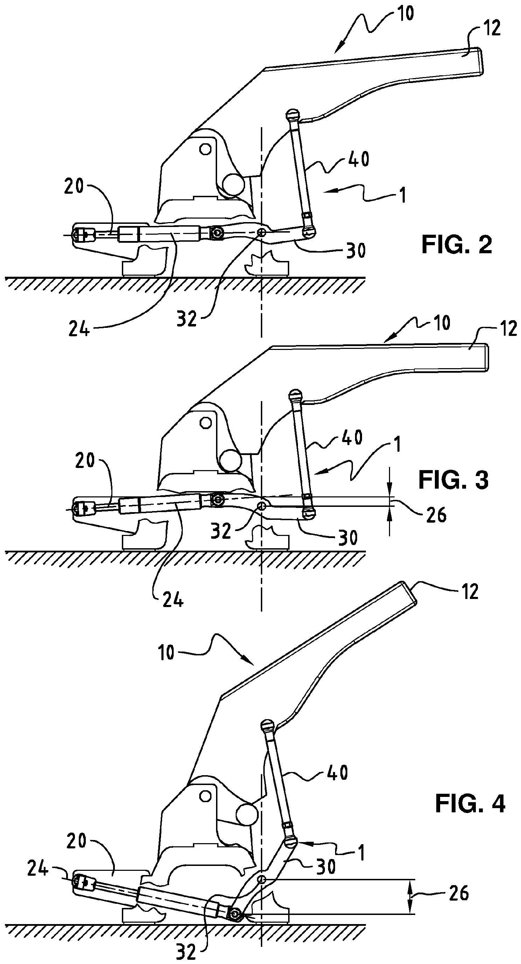

In einer sogenannten Totpunktstellung verläuft die Kraftwirkungslinie 24 nahezu horizontal durch die Mitte der Schwenkachse 32, dargestellt in Figur 2. In dieser Stellung wirkt an der Schwenkachse 32 des Umlenkelements 30 kein Drehmoment. Der Bremshebel 12 befindet sich in einer Stellung, welche nahezu der Freigabestellung entspricht.

Die Freigabestellung des Bremshebels 12 ist in Figur 3 dargestellt. Die Elemente der Anordnung 1 zur Unterstützung der Feststellbremse 10 sind derart in Bezug zueinander positioniert, dass an der Schwenkachse 32 ein kleines Drehmoment erzeugt wird, bedingt durch einen Abstand 26 zwischen der Schwenkachse 32 und der Kraftwirkungslinie 24 in einer senkrechten Ebene durch die Schwenkachse 32. Dieses Drehmoment erleichtert die Bewegung des Bremshebels 12 aus der dargestellten Freigabestellung.

In Figur 4 ist der Bremshebel 12 in einer Feststellposition dargestellt, in welcher die Räder einer Achse festgestellt sind. Die Kraftwirkungslinie 24 des Hubelements 20 schneidet die Ebene, senkrecht durch die Schwenkachse 32 verlaufend, in einem grossen Abstand 26 zu dieser. Demnach wirkt ein hohes Drehmoment auf das Umlenkelement 30, so dass die Bewegung des Bremshebels 12 in die Feststellposition unterstützt wird. Das erzeugte Drehmoment ist insbesondere so gross, dass die Bewegung des Bremshebels 12 in die Feststellposition nahezu selbsttätig erfolgt.

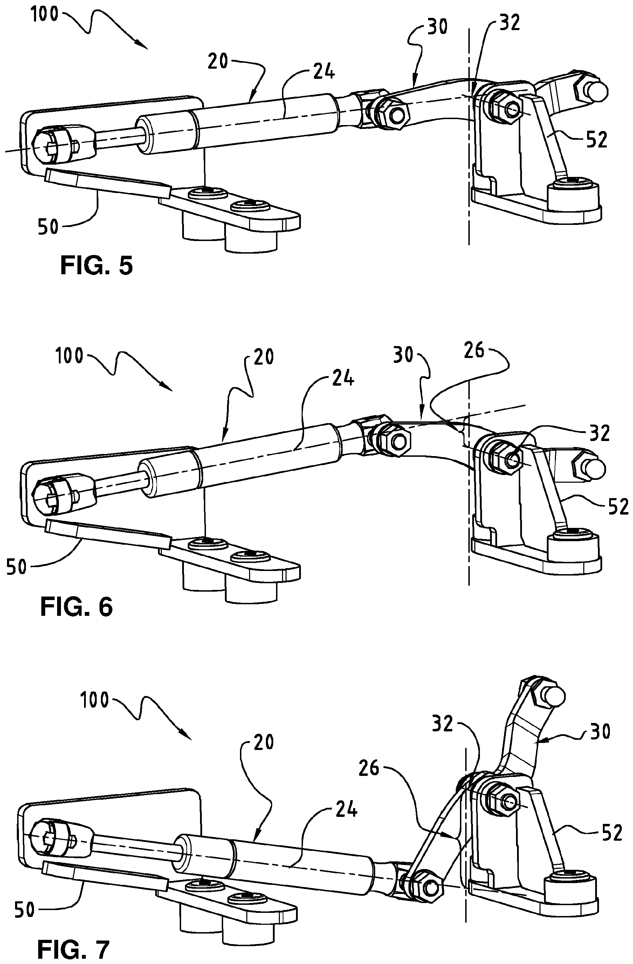

In den Figuren 5, 6 und 7 sind zur Verdeutlichung die Elemente Hubelement 20 und Umlenkelement 30 der Anordnung 1 zur Unterstützung der Feststellbremse 10 in einer perspektivischen Detailansicht in der Totpunktlage (Figur 5), in der Freigabestellung (Figur 6) und in der Feststellposition (Figur 7) dargestellt. Verdeutlicht ist der Abstand 26 zwischen Kraftwirkungslinie 24 und Schwenkachse 32, welche je nach eingenommener Stellung variiert. Insbesondere bilden die Elemente Hubelement 20 und Umlenkelement 30 zusammen mit der ersten Halterung 50 und der zweiten Halterung 52 einen Nachrüstbausatz 100. Dieser Nachrüstbausatz 100 kann in unterschiedliche Einbausituationen eingesetzt werden, um eine Unterstützung einer Feststellbremse 10 zu erzielen.

Die erste Halterung 50 und auch die zweite Halterung 52 können aus mehreren Einzelteilen gefügt werden, insbesondere gesteckt werden. Die erste Halterung 50 und die zweite Halterung 52 können mittels entsprechender Schraubverbindungen ortsfest in Bezug zu der bestehenden Feststellbremse 10 fixiert werden.

## Patentansprüche

1. Anordnung (1) zur Unterstützung einer Feststellbremse (10), welche Feststellbremse (10) einen Bremshebel (12) umfasst, der in einer Trägereinrichtung (14) zwischen einer Freigabestellung und einer Feststellposition schwenkbar gelagert ist und mittels eines Übertragungsmittels mit einem Bremssystem koppelbar, wobei die Anordnung (1) ein Hubelement (20) mit einer Energiespeichereinheit (22) umfasst, wobei das Hubelement (20) mit dem Bremshebel (12) in Wirkverbindung steht,
**dadurch gekennzeichnet, dass**
die Wirkverbindung ein Umlenkelement (30) umfasst, welches schwenkbar um eine Schwenkachse (32) gelagert ist, und derart angeordnet ist, dass das Umlenkelement (30) das Hubelement (20) mit dem Bremshebel (12) koppelt.

2. Anordnung (1) zur Unterstützung einer Feststellbremse (10) nach Anspruch 1, **dadurch gekennzeichnet, dass** das Umlenkelement (30) in Form einer Wippe schwenkbar um die Schwenkachse (32) ist, umfassend einen ersten Hebelabschnitt (34), um mit dem Hubelement (20) gelenkig verbindbar zu sein und einen zweiten Hebelabschnitt (36), um mit dem Bremshebel (12) verbindbar zu sein.

3. Anordnung (1) zur Unterstützung einer Feststellbremse (10) nach Anspruch 1 oder 2, **dadurch gekennzeichnet, dass** das Hubelement (12) eine Gasdruckfeder umfasst.

4. Anordnung (1) zur Unterstützung einer Feststellbremse (10) nach einem der vorhergehenden Ansprüche, **dadurch gekennzeichnet, dass** die Wirkverbindung ferner ein Einstellelement (40) umfasst, welches zwischen Bremshebel (12) und Umlenkelement (30) angeordnet und in seiner Länge einstellbar ist.

5. Anordnung (1) zur Unterstützung einer Feststellbremse (10) nach Anspruch 4, **dadurch gekennzeichnet, dass** das Umlenkelement (30) mittels des Einstellelements (40) mit dem Bremshebel (12) verbindbar ist.

6. Anordnung (1) zur Unterstützung einer Feststellbremse (10) nach einem der vorhergehenden Ansprüche, **dadurch gekennzeichnet, dass** das Hubelement (20) relativ zu dem Umlenkelement (30) anordenbar ist, so dass bei einer Bewegung des Bremshebels (12) zwischen der Freigabestellung und der Feststellposition eine Kraftwirkungslinie (24) des Hubelements (20) ausserhalb seiner Totpunktlage einen sich verändernden Abstand (26) zu der Schwenkachse (32) aufweist.

7. Anordnung (1) zur Unterstützung einer Feststellbremse (12) nach Anspruch 6, **dadurch gekennzeichnet, dass** der Abstand (26) dann maximal ist, wenn sich der Bremshebel (12) in der Nähe der Freigabestellung oder der Feststellposition befindet.

8. Anordnung (1) zur Unterstützung einer Feststellbremse (10) nach Anspruch 7, **dadurch gekennzeichnet, dass** der Abstand (26) so gross ist, dass ein dadurch erzeugtes, auf das Umlenkelement (30) wirkendes Drehmoment ausreicht, um den Bremshebel (12) selbsttätig in die Freigabestellung bzw. Feststellposition zu überführen.

9. Nachrüstbausatz (100) für eine Feststellbremse (10), umfassend eine Anordnung (1) zur Unterstützung der Feststellbremse (10) gemäss einem der vorhergehenden Ansprüche, umfassend ein Einstellelement (40), ferner Halterungen (50, 52) aufweisend, um das Hubelement (20) und das Umlenkelement (30) relativ zu dem Bremshebel (12) anzuordnen.

10. Nachrüstbausatz (100) für eine Feststellbremse (10) nach Anspruch 9, **dadurch gekennzeichnet, dass** eine erste Halterung (50) vorgesehen ist, um ein Ende des Hubelements (20) gelenkig zu lagern und eine zweite Halterung (52), um die Schwenkachse (32) des Umlenkelements (30) zu lagern.

11. Nachrüstbausatz (100) für eine Feststellbremse (10) nach Anspruch 9 oder 10, **dadurch gekennzeichnet, dass** zur gelenkigen Lagerung des Hubelements (20) und/oder des Einstellelements (40) eine Kugelgelenk-Lagerung (60) vorgesehen ist.

12. Feststellbremse (10), umfassend eine Anordnung (1) zur Unterstützung derselben nach einem der Ansprüche 1 bis 9, zum Einsatz in einem Fahrzeug, wie einem PKW, landwirtschaftlichem Fahrzeug, Kommunalfahrzeug und/oder einem Anhänger.

## Claims

1. Arrangement (1) for assisting a parking brake (10), which parking brake (10) comprises a brake lever (12) which is pivotably supported in a carrier device (14) between a release position and a locking position and is able to be coupled to a braking system by means of a transmission means, whereby the arrangement (1) comprises a lifting element (20) with an energy storage unit (22), whereby the lifting element (20) is operatively connected to the brake lever (12),
**characterized in that**
the operative connection comprises a redirecting element (30) which is supported in a way pivotable about a pivot axis (32) and is arranged in such a way that the redirecting element (30) couples the lifting element (20) to the brake lever (12).

2. Arrangement (1) for assisting a parking brake (10) according to claim 1, **characterized in that** the redirecting element (30) is in the form of a rocker pivotable about the pivot axis (32), comprising a first lever section (34) for being connectible in an articulated way to the lifting element (20) and a second lever section (36) for being connectible to the brake lever (12).

3. Arrangement (1) for assisting a parking brake (10) according to claim 1 or 2, **characterized in that** the lifting element (12) comprises a gas pressure spring.

4. Arrangement (1) for assisting a parking brake (10) according to one of the preceding claims, **characterized in that** the operative connection further comprises an adjusting element (40) which is arranged between the brake lever (12) and the redirecting element (30) and is adjustable in its length.

5. Arrangement (1) for assisting a parking brake (10) according to claim 4, **characterized in that** the redirecting element (30) is connectible to the brake lever (12) by means of the adjusting element (40).

6. Arrangement (1) for assisting a parking brake (10) according to one of the preceding claims, **characterized in that** the lifting element (20) is able to be arranged relative to the redirecting element (30) so that, during a movement of the brake lever (12) between the release position and the locking position, a line of action of force (24) of the lifting element (20) outside its dead center position has a varying distance (26) from the pivot axis (32).

7. Arrangement (1) for assisting a parking brake (12) according to claim 6, **characterized in that** the distance (26) is at a maximum when the brake lever (12) is in the vicinity of the release position or the locking position.

8. Arrangement (1) for assisting a parking brake (10) according to claim 7, **characterized in that** the distance (26) is so great that a torque generated thereby and acting on the redirecting element (30) is sufficient to transfer the brake lever (12) automatically into the release position or locking position.

9. Retrofit kit (100) for a parking brake (10), comprising an assembly (1) for assisting the parking brake (10) according to one of the preceding claims, comprising an adjusting element (40), further comprising holders (50, 52) for arranging the lifting element (20) and the redirecting element (30) relative to the brake lever (12).

10. Retrofit kit (100) for a parking brake (10) according to claim 9, **characterized in that** a first holder (50) is provided to support in an articulated way one end of the lifting element (20) and a second holder (52) is provided to support the pivot axis (32) of the redirecting element (30).

11. Retrofit kit (100) for a parking brake (10) according to claim 9 or 10, **characterized in that** a ball joint bearing (60) is provided for the articulated mounting of the lifting element (20) and/or of the adjusting element (40).

12. Parking brake (10) comprising an arrangement (1) for assisting the same according to one of claims 1 to 9, for use in a vehicle such as a passenger car, agricultural vehicle, municipal vehicle and/or a trailer.

## Revendications

1. Dispositif (1) d'assistance pour frein de stationnement (10), lequel frein de stationnement (10) comprend un levier de freinage (12) qui est maintenu de manière pivotante dans un dispositif de support (14) entre une position de déclenchement et une position de verrouillage, et peut être couplé au système de freinage au moyen d'un moyen de transmission, le dispositif (1) comprenant un élément de levage (20) pourvu d'une unité de stockage d'énergie (22), l'élément de levage (20) étant relié de manière opérationnelle au levier de freinage (12),
**caractérisé en ce que**
le lien opérationnel comprend un élément de redirection (30) maintenu pivotant autour d'un axe de pivotement (32), et est agencé de telle manière que l'élément de redirection (30) couple l'élément de levage (20) au levier de freinage (12).

2. Dispositif (1) d'assistance pour frein de stationnement (10) selon la revendication 1, **caractérisé en ce que** l'élément de redirection (30) possède une forme de bascule pivotant autour de l'axe de pivotement (32), comprenant une première section de levier (34) pour être reliée de manière articulée vers l'élément de levage (20) et une deuxième section de levier (36) pour être reliée au levier de freinage (12).

3. Dispositif (1) d'assistance pour frein de stationnement (10) selon la revendication 1 ou 2, **caractérisé en ce que** l'élément de levage (12) comprend un ressort à pression de gaz.

4. Dispositif (1) d'assistance pour frein de stationnement (10) selon l'une des revendications précédentes, **caractérisé en ce que** la liaison opérationnelle comprend en outre un élément d'ajustement (40) qui est agencé entre le levier de freinage (12) et l'élément de redirection (30) et est ajustable en longueur.

5. Dispositif (1) d'assistance pour frein de stationnement (10) selon la revendication 4, **caractérisé en ce que** l'élément de redirection (30) peut être relié au levier de freinage (12) au moyen d'un élément d'ajustement (40).

6. Dispositif (1) d'assistance pour frein de stationnement (10) selon l'une des revendications précédentes, **caractérisé en ce que** l'élément de levage (20) peut être agencé relativement à l'élément de redirection (30) de telle sorte que, pendant un mouvement du levier de freinage (12) entre la position de déverrouillage et la position de verrouillage, une ligne d'action de force (24) de l'élément de levage (20) à l'extérieur de sa position centrale présente une distance variable (26) par rapport à l'axe de pivot (32).

7. Dispositif (1) d'assistance pour frein de stationnement (10) selon la revendication 6, **caractérisé en ce que** la distance (26) est à un maximum lorsque le levier de freinage (12) est à proximité de la position de déverrouillage ou de la position de verrouillage.

8. Dispositif (1) d'assistance pour frein de stationnement (10) selon la revendication 7, **caractérisé en ce que** la distance (26) est tellement grande qu'un couple ainsi généré et agissant sur l'élément de redirection (30) est suffisant pour transférer le levier de freinage (12) automatiquement dans la position de déverrouillage ou la position de verrouillage.

9. Kit d'aménagement (100) pour frein de stationnement (10), comprenant un dispositif (1) d'assistance pour frein de stationnement (10) selon l'une des revendications précédentes, comprenant un élément d'ajustement (40) possédant en outre des supports (50, 52) pour agencer l'élément de levage (20) et l'élément de redirection (30) par rapport au levier de freinage (12).

10. Kit d'aménagement (100) pour frein de stationnement (10) selon la revendication 9, **caractérisé en ce qu'**un premier support (50) est prévu pour soutenir de manière articulée une extrémité de l'élément de levage (20) et un deuxième support (52) est prévu pour soutenir l'axe de pivot (32) de l'élément de redirection (30).

11. Kit d'aménagement (100) pour frein de stationnement (10) selon la revendication 9 ou 10, **caractérisé en ce qu'**un palier à rotule (60) est prévu pour le montage articulé de l'élément de levage (20) et/ou de l'élément d'ajustement (40).

12. Kit d'aménagement (100) pour un dispositif (1) d'assistance pour frein de stationnement (10) selon l'une des revendications 1 à 9, pour une utilisation dans un véhicule tel qu'une voiture de tourisme, un véhicule agricole, un véhicule municipal et/ou une remorque.
